# EUROPEAN PATENT APPLICATION

(11) **EP 2 944 187 A1**
(43) Date of publication of application: **18.11.2015**
(21) Application number: 13871002.5
(22) Date of filing: 04.12.2013
(51) Int. Cl.: A01G 9/00, A01G 7/06, A01G 9/14, A01G 9/24

(54) **PLANT CULTIVATION APPARATUS**

(30) Priority: 09.01.2013 JP 2013001495
(71) Applicant: Tsubakimoto Chain Co., Osaka-shi, Osaka 530-0005 (JP)
(72) Inventor: OHARA, Hitoshi, Osaka-shi Osaka 530-0005 (JP); ITO, Go, Osaka-shi Osaka 530-0005 (JP)
(74) Representative: Von Kreisler Selting Werner - Partnerschaft von Patentanwälten und Rechtsanwälten mbB
(86) International application number: PCT/JP2013/082610
(87) International publication number: WO 2014/109147

(57) **Abstract**

A plant cultivation apparatus is provided, which can implement automatic spraying on leaf surfaces at any time and any number of times to improve production efficiency while preventing a facility equipped with the apparatus from having complex configuration and causing adverse effects on constituent parts. The apparatus includes a plurality of cultivation shelves 121 that store cultivation trays 110, transport means 130 for transferring the cultivation trays 110, and spraying means 140 for spraying a spray liquid on leaf surfaces of the plants. The spraying means 140 is arranged on a transfer path or at a transfer destination of each of the cultivation trays 110, and includes a separator 141 that forms a partitioned-off space, and a spray nozzle 143 that sprays the spray liquid toward interior of the space.

## Description

### Technical Field

The present invention relates to a plant cultivation apparatus including cultivation trays that hold plants, a plurality of cultivation shelves that store the cultivation trays, transport means for transferring the cultivation trays, and spraying means for spraying a spray liquid on leaf surfaces of the plants held on the cultivation trays, and to a plant cultivation apparatus used in a plant factory or the like, for example, where plant cultivation is automated in an artificial environment.

### Background Art

A plant cultivation apparatus has hitherto been known, which includes cultivation trays that hold plants, a plurality of cultivation shelves that store the cultivation trays, and transport means for transferring the cultivation trays, wherein an irrigation mechanism is provided for automatically delivering a cultivation liquid containing nutrients or the like to the cultivation trays (see, for example, Patent Literature 1, etc.).

Automatic spraying of pesticides or growth-promoting substances or the like on leaf surfaces of the plants is not taken into consideration in this plant cultivation apparatus known from Patent Literature 1 (Japanese Patent Application Laid-open No. 2000-209970).

Meanwhile, plant cultivation apparatuses provided with spraying means for spraying irrigation water, or pesticides or growth-promoting substances or the like on leaf surfaces of the plants, have been known (see, for example, Patent Literature 2 and 3, etc.).

The plant cultivation apparatus known from Patent Literature 2 (Japanese Patent Application Laid-open No. H7-327497) is provided with a plurality of spraying means (sprinklers 52) corresponding to a plurality of cultivation shelves (shelf rack 15) and configured such that the spraying means irrigate the plants by spraying water on the leaf surfaces.

The plant cultivation apparatus known from Patent Literature 3 (Japanese Patent Application Laid-open No. H10-215701) is configured such that cultivation trays holding plants (transfer table 21, 121) are transferred by an endless conveyor device and pesticides are automatically sprayed on the leaf surfaces of the plants by spraying means (pesticide spray room 29, pesticide spray device 69) located at one point along the path of the conveyor device.

Meanwhile, spray compositions that are sprayed on the leaf surfaces of the plants to promote photosynthesis, or promote synthesis of substances generated by photosynthesis are known (see, for example, Patent Literature 4, etc.).

However, Patent Document 4 does not allow for any plant cultivation apparatus, nor does it specify any spraying method.

### Citation List

### Patent Literature

Patent Literature 1: Japanese Patent Application Laid-open No. 2000-209970
Patent Literature 2: Japanese Patent Application Laid-open No. H7-327497
Patent Literature 3: Japanese Patent Application Laid-open No. H10-215701
Patent Literature 4: Japanese Patent Application Laid-open No. 2001-10914

### Summary of the Invention

### Problems to be Solved by the Invention

Automatic spraying of pesticides or compositions or the like such as those of Patent Literature 4 on the leaf surfaces of the plants as mentioned above is not taken into consideration in the known plant cultivation apparatus such as the one in Patent Literature 1, so that workers had to spray these liquids manually on the leaf surfaces at appropriate times as required.

In the known plant cultivation apparatus such as the one in Patent Literature 2, a large number of spraying means were necessary, which made the equipment such as pipes complex.

Another problem was that the liquid sprayed over the entire plant cultivation apparatus would scatter and might cause adverse effects such as soiling and corroding on constituent parts of various sections of the plant cultivation apparatus.

Yet another problem was that it was impossible to spray growth-promoting substances or pesticides and the like separately from the irrigation at different times, since liquids were sprayed in the same manner as irrigation water and the growth-promoting substances or pesticides and the like had to be mixed in the normal irrigation water if these were to be sprayed on the leaf surfaces.

Another similar spraying means could be arranged separately so as to spray the growth-promoting substances or pesticides and the like and the irrigation water at any independent times, or, spraying means such as those in Patent Literature 2 may be added to the known plant cultivation apparatus having irrigation means such as those in Patent Literature 1, so as to spray growth-promoting substances or pesticides and the like. However, the problems of the equipment such as pipes becoming more complex, and of adverse effects on the constituent parts cannot be avoided.

In the known plant cultivation apparatus such as the one in Patent Literature 3, since the cultivation trays are transferred by the endless conveyor device, spraying of growth-promoting substances or pesticides and the like was synchronous with other processes such as irrigation and other operations. To increase the number of spraying only, there had to be additional spraying means at different positions along the path. Thus it was difficult to spray at any time and any number of times differently from other processes.

Such configuration could not be applied to known plant cultivation apparatuses such as those in Patent Literature 1 or Patent Literature 2.

The present invention is directed at solving these problems and it is an object of the invention to provide a plant cultivation apparatus that makes possible the automatic spraying on leaf surfaces at any time and any number of times to improve production efficiency without making the equipment further complex and without causing adverse effects on constituent parts.

### Means for Solving the Problems

A plant cultivation apparatus according to the present invention includes: cultivation trays that hold plants; a plurality of cultivation shelves that store the cultivation trays; transport means for transferring the cultivation trays; and spraying means for spraying a spray liquid on leaf surfaces of the plants held on the cultivation trays, wherein the spraying means is arranged on a transfer path or at a transfer destination of each of the cultivation trays transferred by the transport means, and includes a separator that forms a partitioned-off space above the cultivation tray, and a spray nozzle that sprays a spray liquid toward interior of the space formed by the separator, whereby the problems mentioned above are solved.

### Effects of the Invention

With the plant cultivation apparatus according to claim 1, as the cultivation trays are transferred to the spraying means by the transport means, it is possible to automatically spray pesticides or growth-promoting substances and the like on the leaf surfaces of the plants at any times independently of other operations or processes such as irrigation. The spraying means can be arranged only at a limited, specific location, so that an increase in complexity of the facility can be avoided.

With the separator that forms a partitioned-off space above the cultivation tray, adverse effects of sprayed liquids such as soiling or corroding on constituent parts of various sections of the plant cultivation apparatus can be prevented.

Moreover, since the spraying means are arranged on the transfer path or at the transfer destination of the cultivation trays, the degree of freedom in setting the position of the spraying means within the entire facility of the plant cultivation apparatus is increased, so that optimal designing is possible, with minimum influence of scattering liquids on constituent parts of various sections of the plant cultivation apparatus and with minimum influence on the size or layout of the entire facility.

With the configuration as set forth in claim 2, the spraying means are located near the automatic irrigation means, so that it is possible to handle fluids to be sprayed on leaf surfaces and cultivation liquids for the irrigation only at the same specific place, whereby adverse effects such as soiling or corroding on constituent parts of various sections of the plant cultivation apparatus can be prevented more reliably.

With the configuration as set forth in claim 3, a spray nozzle is connected to an irrigation pipe via a switching valve, so that an increase in complexity of the facility can be avoided further.

With the configuration as set forth in claim 4, the plurality of cultivation shelves are lined up horizontally and vertically. Since plants can be cultivated on a multiplicity of cultivation trays that are efficiently stored, the production efficiency per space is improved. Since the transport means includes a moving table movable horizontally and vertically, and a transfer mechanism that transfers the cultivation trays between the respective cultivation shelves and the moving table, it is possible to transfer any given cultivation tray at any time to the automatic irrigation means or spraying means for spraying irrigation water or fluids to be sprayed on leaf surfaces in accordance with the growth of the plants.

With the configuration as set forth in claim 5, the spraying means are located at least at one of the plurality of cultivation shelves, and no special station is provided but part of the facility is shared instead, whereby an increase in complexity of the facility can be avoided further.

With the configuration as set forth in claim 6, the cultivation shelf at which the spraying means are located is configured as a work station where other operations such as loading and unloading are carried out. There is no need to provide an additional cultivation shelf for providing the spraying means, so that an increase in complexity of the facility can be avoided further.

With the configuration as set forth in claim 7, the spraying means are located on the moving table of the transport means. Since there is no need to provide space dedicated to arrange the spraying means, the production efficiency per space will further be improved.

With the configuration as set forth in claim 8, the spraying means are arranged on a transfer conveyor that transfers the cultivation trays horizontally, so that there is no need to provide space dedicated to arrange the spraying means, and the production efficiency per space will further be improved.

With the configuration as set forth in claim 9, the transport means is configured to transfer the cultivation trays by moving the plurality of cultivation shelves, and the spraying means are located on a transfer path or at a transfer destination of the plurality of cultivation shelves. The entire facility is thus further simplified, and an increase in complexity of the facility can be avoided further.

With the configuration as set forth in claim 10, the lighting means is provided, and a spray liquid that contains a component that promotes synthesis of a substance generated by photosynthesis of plants held on the cultivation trays is sprayed, so that the growth of the plants is further promoted and the production efficiency can be improved.

Spraying the spray liquid on leaf surfaces leads to efficient photosynthesis by the presence of amino acids and sugar, and the presence of enzymes significantly promotes the photosynthesis.

Therefore, it is possible to promote the growth relative to the light amount of the lighting means, or, to achieve an optimal cultivation condition with reduced light amount of the lighting means, so that the production efficiency per unit of energy is improved.

### Brief Description of the Drawings

FIG. 1 is a perspective view of a plant cultivation apparatus according to a first embodiment of the present invention.
FIG. 2 is a side view of FIG. 1.
FIG. 3 is a schematic explanatory diagram illustrating a side view of spraying means of the plant cultivation apparatus according to the first embodiment of the present invention.
FIG. 4 is an explanatory diagram illustrating the front view of FIG. 3.
FIG. 5 is a schematic explanatory diagram of spraying means of a plant cultivation apparatus according to a second embodiment of the present invention.
FIG. 6 is a schematic perspective view of spraying means of a plant cultivation apparatus according to a third embodiment of the present invention.
FIG. 7 is a schematic explanatory diagram illustrating the side view of FIG. 6.

### Explanation of Reference Numerals

- 100:: Plant cultivation apparatus
- 101:: Work station
- 102:: Work table
- 110, 210, 310:: Cultivation tray
- 120:: Cultivation rack
- 121, 221:: Cultivation shelf
- 130:: Transport means
- 131, 231:: Moving table
- 333:: Transfer conveyor
- 134:: Track rail
- 135:: Elevator guide
- 140, 240, 340:: Spraying means
- 141, 241, 341:: Separator
- 142, 342:: Separator curtain
- 143, 343:: Spray nozzle
- 144, 244, 344:: Optical sensor
- 150:: Automatic irrigation means
- 151:: Irrigation pipe
- 152:: Switching valve
- 153, 353:: Irrigation nozzle
- P:: Plant

### Mode for Carrying Out the Invention

A plant cultivation apparatus according to the present invention may be embodied in any specific form as long as it includes cultivation trays that hold plants, a plurality of cultivation shelves that store the cultivation trays, transport means for transferring the cultivation trays, and spraying means for spraying a spray liquid on leaf surfaces of the plants held on the cultivation trays, wherein the spraying means is arranged on a transfer path or at a transfer destination of each of the cultivation trays transferred by the transport means, and includes a separator that forms a partitioned-off space above the cultivation tray, and a spray nozzle that sprays a spray liquid toward interior of the space formed by the separator, whereby the apparatus can automatically spray on leaf surfaces at any time and any number of times to improve production efficiency without making the equipment further complex and without causing adverse effects on constituent parts.

The cultivation trays may hold plants directly or on a culture medium such as urethane, or may hold cultivation pots or the like that support plants.

The cultivation trays may hold a cultivation bed such as soil or the like or a cultivation liquid. The routs of the plants may be exposed below the trays.

The cultivation shelves may be set up in a fixed manner, or may be arranged to be movable themselves separately from the transport means of the cultivation trays, or moving means of the cultivation shelves may serve also as the transport means for transferring the cultivation trays.

The drawings which will be referred to in the explanation below are all schematic and do not represent the actual layout, shape, dimensional ratios and the like.

### Embodiment 1

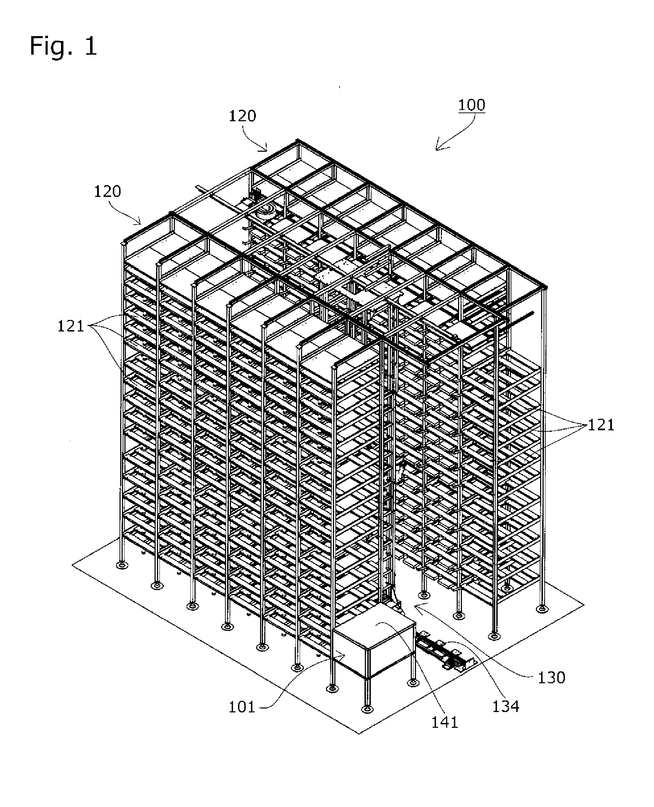

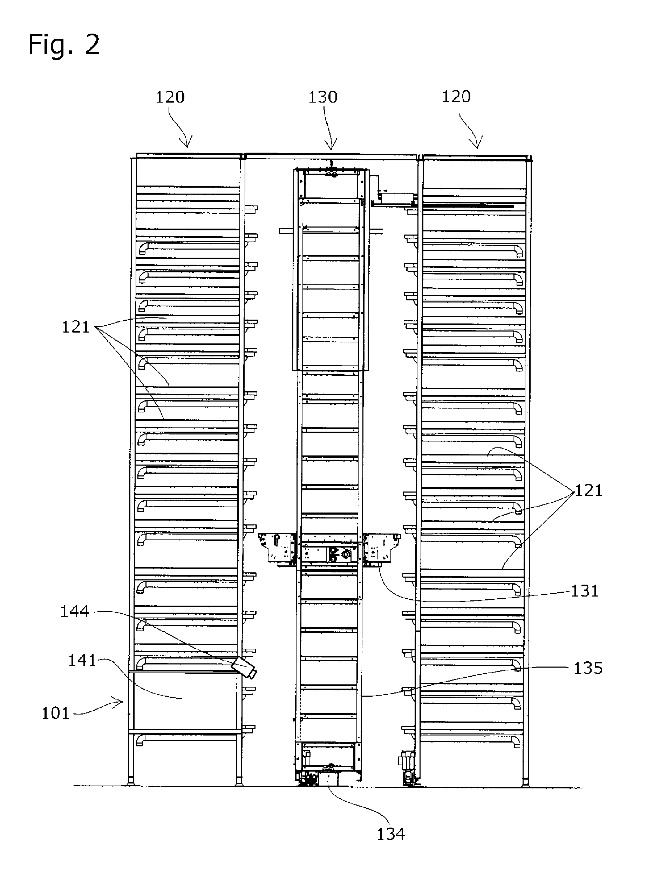

A plant cultivation apparatus according to a first embodiment of the present invention will be described with reference to FIG. 1 to FIG. 4.

The plant cultivation apparatus 100 according to this embodiment includes two cultivation racks 120 in which a large number of cultivation shelves 121 are lined up horizontally and vertically, each shelf storing a cultivation tray 110 that holds plants P, for the cultivation of the plants.

The two cultivation racks 120 are set up parallel to and at some distance from each other, with transport means 130 being provided between the two cultivation racks 120.

The transport means 130 includes a track rail 134 laid out on the floor surface between the two cultivation racks 120, an elevator guide 135 that can run horizontally on the track rail 134, and a moving table 131 that can move vertically along the elevator guide 135.

The cultivation trays 110 that hold plants P are designed such that they can be transferred by the transport means 130 at any given time and stored to, or taken out from, any given cultivation shelf 121.

The elevator guide 135 of the transport means 130, the moving mechanism of the moving table 131, and other mechanisms for transporting the cultivation trays 110 between the moving table 131 and cultivation shelves 121 are those known in the art, and may have any configurations as long as they are capable of transferring the cultivation trays 110.

The lowermost cultivation shelf at one far end of one cultivation rack 120 is configured as a work station 101, where automatic irrigation means 150 and spraying means 140 are provided. This work station 101 is configured to serve also as a loading/unloading station, wherein the cultivation trays 110 can be loaded to and unloaded from the station on the opposite side from the moving table 131.

Although there are no other cultivation shelves 121 above the work station 101 in this embodiment, there may be other cultivation shelves 121 in this space.

The position of the work station 101 can be freely designed in accordance with the relationship in the layout with other equipment as long as it is set within the moving range of the moving table 131. Any one or a plurality of cultivation shelves 121 at a suitable position can be configured as the work station 101.

Alternatively, work stations 101 may be provided at different positions for each of the functions such as the automatic irrigation means 150, spraying means 140, and loading/unloading station.

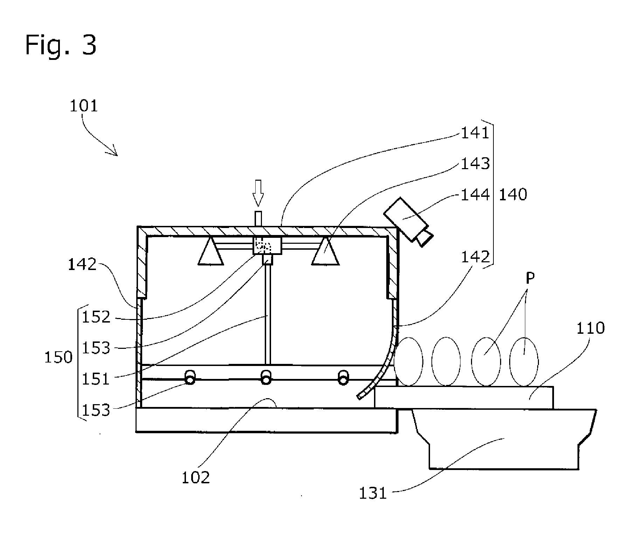

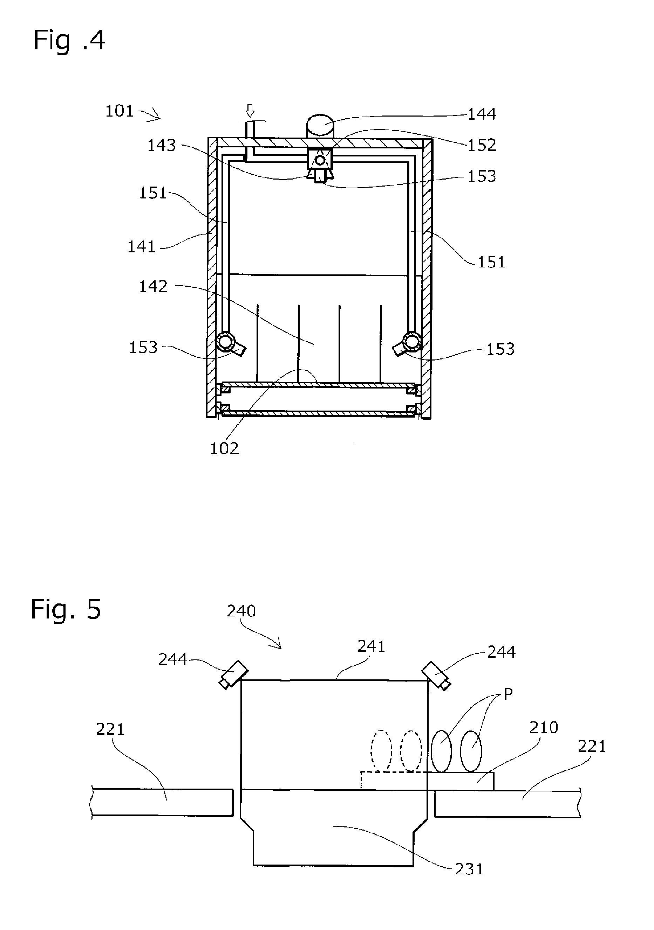

At the work station 101, as shown in FIG. 3 and FIG. 4, a work table 102 is provided, from or to which the cultivation trays 110 holding plants P can be loaded and unloaded on the side of the moving table 131 and on the opposite side therefrom, as well as the spraying means 140 and the automatic irrigation means 150.

The spraying means 140 includes a separator 141 that forms a partitioned-off space above a cultivation tray 110 that has been loaded onto the work table 102, spray nozzles 143 that spray a spray liquid toward the interior of this space, and an optical sensor 144 that observes the loaded cultivation tray 110 from above.

The separator 141 is provided to cover the four sides and top of the work table 102 to separate the space from outside. The sides of the separator 141 where the cultivation trays 110 that hold plants P are loaded and unloaded are formed by a separator curtain 142 that is made of a flexible material or designed as a blind with suitable height and width to allow for passage of trays without damaging the plants P.

The automatic irrigation means 150 includes irrigation nozzles 153 that supply a cultivation liquid to be fed to the cultivation trays 110, irrigation pipes 151 that deliver the cultivation liquid from outside to the irrigation nozzles 153, and a switching valve 152 provided midway in the pipes.

The spray nozzles 143 are connected to the switching valve 152 provided midway in the irrigation pipes 151, and the spray liquid to be sprayed on the leaf surfaces of the plants is delivered from outside to the switching valve 152 through the irrigation pipes 151.

While the spray nozzles 143 are arranged in an upper part of the internal space of the separator 141 and the irrigation nozzles 153 are located in lower and upper parts of the internal space of the separator 141 in this embodiment, the positions and numbers of these nozzles may be suitably designed in accordance with the type of the cultivated plants P or the situations of the facility.

The pipes may be provided independently of the spray nozzles 143 and their layout and others may be freely designed.

The operation of the plant cultivation apparatus 100 configured as described above will be explained.

A cultivation tray 110 holding plants P to be cultivated is loaded from the work station 101, and transferred from the work station 101 by the transport means 130 and stored into a predetermined cultivation shelf 121.

The plurality of cultivation shelves 121 are arranged such that their distance in the up and down direction varies, and are provided with lighting equipment suitable for each growing stage of the plants P. The cultivation trays 110 holding the plants P to be cultivated are moved to a suitable one of the cultivation shelves 121 by the transport means 130 in accordance with the growth of the plants P.

The cultivation trays 110 are transferred from the cultivation shelves 121 by the transport means 130 to the work station 101 at a suitable time, and an irrigation operation is carried out with the use of the irrigation means 150 provided at the work station 101. After that, the trays are returned to the cultivation shelves 121 where they came from, or to other cultivation shelves 121 more suitable for the grown plants.

To spray the spray liquid on the leaf surfaces of the plants P, similarly to the irrigation operation described above, the trays are transferred from the cultivation shelves 121 by the transport means 130 to the work station 101 at a suitable time, and a spray operation is carried out with the use of the spraying means 143 provided at the work station 101. After that, the trays are returned to the cultivation shelves 121 where they came from, or to other cultivation shelves 121 more suitable for the grown plants.

When the cultivation of the plants P by the plant cultivation apparatus 100 is complete, the cultivation trays 110 are transferred to the work station 101 by the transport means 130, and unloaded from the work station 101.

These series of operations are all managed by a controller (not shown), by giving an individual ID to each of the cultivation trays 110, and carried out automatically in an optimal operation procedure with an optimal number of times of irrigation and spraying on the leaf surfaces at appropriate times in accordance with the types of cultivated plants P.

The individual IDs given to the cultivation trays 110 may be displayed such as to be optically detectable, so that cultivation trays 110 loaded into the work station 101 can be identified by the optical sensor 144 provided in the work station 101, to carry out such control more reliably.

Since the irrigation operation and spraying operation are all performed at the work station 101 as described above, the irrigation means 150 and the spraying means 140 can be provided with minimum necessary equipment, and since these need not be provided at the cultivation shelves 121, the facility can be designed optimally with minimum influence by these equipment items on the size or layout of the entire facility configuration.

Since the separator 141 that forms a partitioned-off space above the cultivation tray 110 is provided, the liquid to be sprayed from the spray nozzles 143 onto the leaf surfaces or the cultivation liquid to be fed from the irrigation nozzles 153 for irrigation purposes are prevented from scattering, so that adverse effects of these liquids such as soiling or corroding on constituent parts of various sections of the plant cultivation apparatus can be prevented.

Moreover, since the cultivation trays 110 can be transferred by the transport means 130 at suitable times as required, various operations such as loading, irrigation, moving, spraying, unloading, and so on, can be performed at independent and suitable times.

### Embodiment 2

Spraying means 240 in a plant cultivation apparatus according to a second embodiment of the present invention will be described with reference to FIG. 5.

The spraying means 240 of the plant cultivation apparatus according to this embodiment is provided to a moving table 231. That is, a separator 241 that forms a partitioned-off space above a cultivation tray 210 is provided to the moving table 231, and spray nozzles (not shown) are provided in the interior of this space, and optical sensors 244 are provided in the upper part of the separator 241.

The configuration other than the spraying means 240 is the same as that of the previously described first embodiment except for the common use of the pipes with the irrigation means in the work station.

According to this embodiment, the cultivation trays 210 need not be transferred to the work station for the spraying operation, and the spraying operation can be carried out speedily, so that this embodiment is applicable to a cultivation method where spraying operation is required more frequently, which may allow for more efficient cultivation.

The optical sensor 244 is provided on both sides of the moving table 231, since the cultivation trays 210 are loaded in from either side.

### Embodiment 3

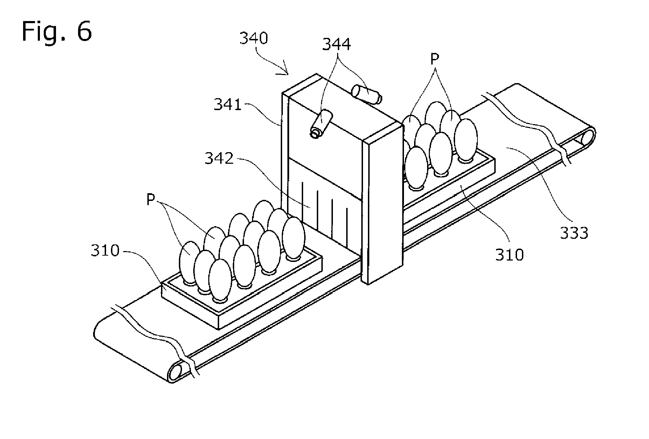

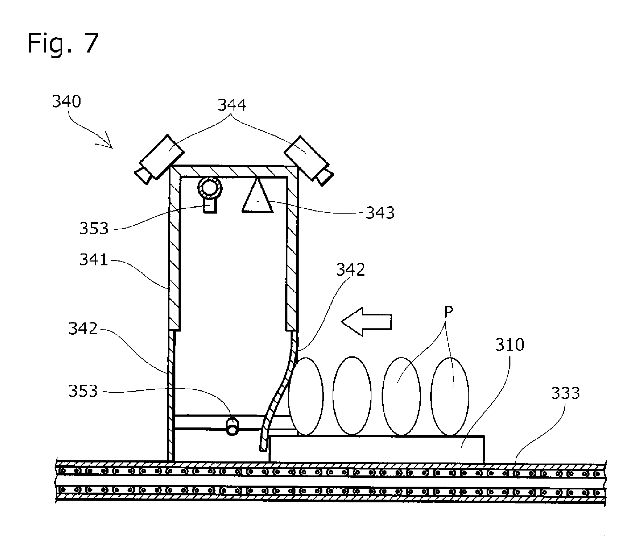

Spraying means 340 in a plant cultivation apparatus according to a third embodiment of the present invention will be described with reference to FIG. 6 and FIG. 7.

The spraying means 340 of the plant cultivation apparatus according to this embodiment is applied when the transport means is a transfer conveyor 333 that transfers the cultivation trays 310 horizontally and continually.

The spraying means 340 is provided at a predetermined point of the transfer conveyor 333 and includes a separator 341 that forms a partitioned-off space above a cultivation tray 310, spray nozzles 343 provided in the interior of this space, and optical sensors 344 provided in the upper part of the separator 341.

The separator 341 has a length in the transfer direction of the cultivation tray 310 that is shorter than the length of the cultivation tray 310, and is configured to let the cultivation tray 310 pass continually without stopping.

The sides of the separator 341 where the cultivation trays 310 that hold plants P are loaded and unloaded are formed by a separator curtain 342 that is made of a flexible material or designed as a blind with suitable height and width to allow for passage of trays without damaging the plants P.

Irrigation nozzles 353 are provided in the internal space formed by the separator 341 so that the irrigation operation can be performed, too.

The pipes for the spraying means and irrigation means may be used in common with a switching valve or the like similarly to the first embodiment, or may be provided individually. The layout and others of the nozzles and pipes may be freely designed.

According to this embodiment, in the plant cultivation apparatus where a large number of cultivation shelves or the like are arranged horizontally and the transport means serve as the main horizontal transport body of the cultivation trays, the irrigation means and spraying means can be provided with minimum necessary equipment, so that the facility can be designed optimally with minimum influence on the size or layout of the entire facility configuration.

As the irrigation operation and spraying operation can be performed during the continuous transfer, the production efficiency is improved.

This embodiment may also be applied to a plant cultivation apparatus configured such that the cultivation trays serve as cultivation shelves and cultivation takes place during the continuous transfer. Also, the apparatus may include a vertical transfer path, or vertically circulating cultivation shelves, and spraying means and irrigation means may be provided on a transfer path, or on a circulation path of the cultivation shelves, with the separator configuration and the arrangement of the nozzles and pipes or the like being suitably changed.

According to the various embodiments of the plant cultivation apparatus of the present invention, leaf surfaces can be sprayed automatically at any time and any number of times without making the equipment further complex and without causing adverse effects on constituent parts, whereby the production efficiency can be improved.

While a plurality of plants P are held on the respective cultivation trays 110, 210, and 310 of various embodiments described above, the trays may each hold a single plant. The trays need not necessarily have the shape known as a "tray" but may have any shape as long as they can hold plants P.

Lighting means may be provided as required above each of the cultivation shelves 121 and configured such that the amount of light projected to the plants is controllable, whereby an optimal cultivation condition and energy saving can both be achieved.

## Claims

1. A plant cultivation apparatus comprising: cultivation trays that hold plants; a plurality of cultivation shelves that store said cultivation trays; transport means for transferring said cultivation trays; and spraying means for spraying a spray liquid on leaf surfaces of the plants held on said cultivation trays, wherein
said spraying means is arranged on a transfer path or at a transfer destination of each of said cultivation trays transferred by said transport means, and includes a separator that forms a partitioned-off space above said cultivation tray, and a spray nozzle that sprays a spray liquid toward interior of the space formed by said separator.

2. The plant cultivation apparatus according to claim 1, further comprising
automatic irrigation means for irrigating said cultivation trays, wherein
said automatic irrigation means is located on the transfer path or at the transfer destination of each of said cultivation trays transferred by said transport means, and near said spraying means.

3. The plant cultivation apparatus according to claim 2, wherein said automatic irrigation means includes an irrigation pipe for supplying a liquid for irrigation,
said spray nozzle being connected to said irrigation pipe via a switching valve.

4. The plant cultivation apparatus according to any one of claims 1 to 3, wherein
said plurality of cultivation shelves are lined up horizontally and vertically, and wherein
said transport means includes a moving table movable horizontally and vertically, and a transfer mechanism that transfers the cultivation trays between said respective cultivation shelves and the moving table.

5. The plant cultivation apparatus according to claim 4, wherein said spraying means is located at least at one of said plurality of cultivation shelves.

6. The plant cultivation apparatus according to claim 5, wherein the cultivation shelf at which said spraying means is located is configured as a work station where other operations are also carried out.

7. The plant cultivation apparatus according to claim 4, wherein said spraying means is located on the moving table of said transport means.

8. The plant cultivation apparatus according to any one of claims 1 to 4, wherein
said transport means includes a transfer conveyor that transfers said cultivation trays horizontally,
said spraying means being located on said transfer conveyor.

9. The plant cultivation apparatus according to claim 8, wherein
said plurality of cultivation shelves are provided in a movable manner, and
said transport means is configured to transfer the cultivation trays by moving said plurality of cultivation shelves,
said spraying means being located on a transfer path or at a transfer destination of each of said plurality of cultivation shelves.

10. The plant cultivation apparatus according to any one of claims 1 to 9, further comprising
lighting means for projecting light to the plants held on said cultivation trays, wherein
said spray nozzle sprays a spray liquid that contains a component that promotes photosynthesis, or synthesis of a substance generated by photosynthesis, of the plants held on said cultivation tray.
